# EUROPÄISCHE PATENTSCHRIFT

(11) **EP 2 780 103 B1**
(45) Veröffentlichungstag und Bekanntmachung des Hinweises auf die Patenterteilung: **11.10.2017**
(21) Anmeldenummer: 12786814.9
(22) Anmeldetag: 25.10.2012
(51) Int. Cl.: B01F 5/06, B01F 3/02, B01F 5/04, F02M 21/04

(54) **GASMISCHER UND GASMISCHSYSTEM**
GAS MIXER AND GAS MIXING SYSTEM
MÉLANGEUR DE GAZ ET SYSTÈME DE MÉLANGE DE GAZ

(30) Priorität: 14.11.2011 DE 102011086321
(43) Veröffentlichungstag der Anmeldung: 24.09.2014
(73) Patentinhaber: MTU Friedrichshafen GmbH, 88045 Friedrichshafen (DE)
(72) Erfinder: RAINDL, Markus, 87509 Seifen (DE)
(86) Internationale Anmeldenummer: PCT/EP2012/004450
(87) Internationale Veröffentlichungsnummer: WO 2013/072010

(56) Entgegenhaltungen:
- EP-A2- 0 303 439
- WO-A1-96/29511
- DE-C- 681 375
- DE-U1- 8 634 567
- US-A1- 2006 060 173
- US-A1- 2009 088 950

## Beschreibung

Die Erfindung betrifft einen Gasmischer gemäß dem Oberbegriff des Anspruchs 1. Der Gasmischer weist auf: ein erstes, äußeres Gasgehäuseteil mit einer Zuführung für das erste Gas in einer Längsachse und einer Zuführung für das zweite Gas in einer Querachse; ein zweites, inneres, unter Bildung eines Ringraumes für ein zweites Gas, in das erste Gasgehäuseteil eingesetztes, Gasgehäuseteil, mit einem Mischraum in den das erste Gas und das zweite Gas zum Mischen zu einem Gasgemisch einbringbar ist, wobei das erste Gasgehäuseteil und das zweite Gasgehäuseteil und der Ringraum entlang der Längsachse ausgerichtet sind und der Mischraum zylindrisch entlang der Längsachse ausgerichtet ist, und wobei im Mischraum eine Mischanordnung einer Anzahl von Hohlstäben angeordnet ist, wobei eirr Hohlraum eines Hohlstabes mit dem Ringraum beidseitig fluidverbunden ist. Die Erfindung betrifft auch ein Gasmischsystem mit einem Gasmotor nach Anspruch 17.

Ein Gasmischer der eingangs genannten Art dient zum Mischen eines ersten Gases und eines zweiten Gases. Insbesondere hinsichtlich eines Gasmotors ist das erste Gas in Form von Verbrennungsluft, d. h. Frischluft oder ein mageres Luft/Gas-Gemisch --auch als Ladeluft bezeichnet--, und das zweite Gas in Form eines Brenngases gebildet. Im Gasmischer wird ein für den Gasmotor geeignetes Luft/Brenngas-Gemisch aus Verbrennungsluft und einem dieser zugemischten Brenngas zur Verfügung gestellt. Insbesondere für einen Magergasmotor hat es sich als wichtig erwiesen, ein Lambda-Verhältnisnämlich das Verhältnis eines Brenngases zur Verbrennungsluft-- zum Beispiel auf den Leistungsbedarf eines Magergasmotors einzustellen. Ein Gasmischer kann beispielsweise aus EP 0 898 064 A1, --dort in Form eines Venturimischers-- entnommen werden, der in einem Gasmischsystem einem Magergasmotor zur Zumischung von Brenngas zur Verbrennungsluft oder einem Magergasgemisch vorgeschaltet ist.

Grundsätzlich kann bei einem Venturimischer mit unterschiedlichen Querschnitten gearbeitet werden, um die Mischqualität des Luft/Brenngas-Gemisches zu erhöhen; beispielsweise in EP 2 258 983 A2 ist eine mit unterschiedlichen Querschnitten versehene Mischsektion eines Venturimischers beschrieben. In GB 154,920 ist ein eingangs genannter Gasmischer mit beweglichem Anströmkörper in einem Venturirohr beschrieben, wodurch sich ein Mischspalt unterschiedlich einstellen lässt. Ein Venturimischer arbeitet auf Basis des für die Mischung der Gase maßgeblichen Venturiprinzips, d. h. maßgeblich ist die Erniedrigung des globalen Staudrucks in der Strömung aufgrund der Erhöhung der Strömungsgeschwindigkeit im Bereich des Anströmkörpers infolge der globalen Verringerung des Strömungsquerschnitts durch einen zentral im Strömungsquerschnitt angeordneten Anströmkörper. Dieses global maßgebliche Venturiprinzip beruht auf der Verwendung eines zentralen Anströmkörpers, der die Strömung im gesamten Strömungsquerschnitt beeinflusst, bzw. beschleunigt.

In EP 2 016 994 A ist ein Gasmischer der eingangs genannten Art beschrieben, bei dem ein Venturirohr im Bereich eines verengten Querschnitts Eintrittsöffnungen für Brenngas aufweist, die während des Mischvorgangs mittels Regelgliedern veränderbar sind. Die Regelglieder umfassen dabei eine den verengten Querschnitt umfassende Regelhülse mit Brennstoffregeföffnungen, wobei bei einem gegenseitigen Verstellen der Brennstoffregelöffnungen gegen Eintrittsöffnungen für das Brenngas die Größe von Durchlassquerschnitten für das Brenngas veränderbar ist. Der verengte Querschnitt ist mittels eines im Venturirohr angeordneten Verdrängungskörpers gebildet. Dadurch lässt sich zwar eine vergleichsweise genaue Einstellung eines Durchlassquerschnitts erreichen; jedoch ist ein entsprechendes Regelverfahren vergleichsweise langsam auszuführen, bzw. die zulässige maximale Stellkraft ist beschränkt. Außerdem ist die mechanische Konstruktion der vorgenannten Regelglieder vergleichsweise komplex, so dass die Einstellgenauigkeit über die Laufzeit des Gasmischers durch Verschleiß und gegebenenfalls verschmutzungsbeding beeinträchtigt werden kann.

Alle vorgenannten Lösungen haben -neben einem zumeist zeppelinförmigen Verdrängungskörper - eine sich zum achsmittig hin angeordneten Verdrängungskörper sich verengende Durchströmungsöffnung, um eine möglichst hohe Beschleunigung der Verbrennungsluft im Bereich der verengten Durchströmungsöffnung zu erzeugen; damit also, um einen ausreichenden, über den gesamten Querschnitt der verengten Durchströmungsöffnung hohen Unterdruck zur Zumischung des Brenngases zu erzeugen. Dieses hier als "globales" Mischprinzip eines Venturiprinzips stellt das Venturiprinzip als hauptsächlich maßgebliches Prinzip für den Mischvorgang über den gesamten Querschnitt der verengten Durchströmungsöffnung in den Vordergrund.

Das Venturiprinzip im allgemeinen hat grundsätzlich den Vorteil, dass die Mengen von Brenngas und Verbrennungsluft zueinander im gleichen Verhältnis bleiben, auch wenn sich für eine Leistungsveränderung eine Drosselklappenstellung und damit auch der zentrale Luftmassenstrom des ersten Gases ändert.

Theoretisch arbeitet das Venturiprinzip auch verlustfrei; das heißt theoretisch ohne Totaldruckverlust. In der Realität zeigt sich jedoch, dass bei einer Venturidüse ein im Rahmen eines "globalen Venturiprinzips" erzeugtes negatives Druckgefälle --d. h. eine Druckdifferenz zwischen einer Zuführung für das zweite Gas und einer Zuführung für das erste Gas-- abhängt von einer Zylinderzahl des am Gasmischer angeschlossenen Gasmotors oder dergleichen Volumen einer Gasverwertungsanlage. Beispielsweise ist festzustellen, dass ein Gasmotor mit einer mehr als zweistelligen Zylinderzahl einen Totaldruckverlust am Gasmischer im zweistelligen mBar-Bereich bedingen kann. Ein solcher Totaldruckverlust muss regelmäßig durch einen dem Gasmischer üblicherweise nachgeordneten Verdichter eines Abgasturboladers abgebaut werden; das heißt die vom Verdichter erbrachte Leistung verändert sich mit der Varianz des Totaldruckverlustes, was den Gesamtwirkungsgrad einer mit dem Gasmischer versehenen Brennkraftmaschine, insbesondere eines Gasmischsystems mit Gasmotor oder dergleichen, verschlechtert. Dies erweist sich insbesondere als nachteilig, wenn das zweite Gas ein brennbares Gas wie Erdgas, BioGas oder dergleichen Brenngas mit hochvariabiem CO₂-Anteil ist und das erste Gas eine Ladeluft oder dergleichen Verbrennungsluft ist.

Wünschenswert ist es, einen Gasmischer derart auszubilden, dass ein Verdichter einer Brennkraftmaschine entlastet ist. Wünschenswert ist auch ein vergleichsweise einfach aufgebauter Gasmischer mit auf Langlebigkeit und Vertässlichkeit ausgelegter Bauform.

An dieser Stelle setzt die Erfindung an, deren Aufgabe es ist, einen Gasmischer anzugeben der hinsichtlich des Standes der Technik verbessert ist. Insbesondere soll ein Gasmischer derart ausgelegt sein, dass dieser hinsichtlich eines Totaldruckverlustes verbessert ist. Insbesondere soll ein Gasmischer -selbst bei unterschiedlich angeschlossener Zylinderzahl oder sonstigem Arbeitsvolumen einer nachgeordneten Verbrennungsanlage-- weitgehend unbeeinflusst bleiben hinsichtlich eines Totaldruckverlustes. Aufgabe der Erfindung ist es auch, eine verbesserte Anlage mit einem Gasmischer, insbesondere einen Gasmotor oder sonstige Brennkraftmaschine mit einem Gasmischer anzugeben. DE 681 375 C offenbart einen Gasmischer entsprechend dem Oberbegriff des Anspruchs 1.

Die Aufgabe hinsichtlich des Gasmischers wird durch einen Gasmischer der eingangs genannten Art gelöst, der erfindungsgemäß auch die Merkmale des kennzeichnenden Teils des Anspruchs 1 aufweist.

Konkret geht die Erfindung von einem Gasmischer aus, bei dem im Mischraum eine Mischanordnung einer Anzahl von Hohlstäben angeordnet ist, wobei ein Hohlraum eines Hohlstabes mit dem Ringraum beidseitig fluidverbunden ist. Die Erfindung geht von der Überlegung aus, dass sich --in Abkehr von einem global maßgeblichen Venturiprinzip für den Mischvorgang-- ein lokales Mischprinzip besser bewährt hat, um den Gasmischer weitgehend unanfällig für Totaldruckverluste auszubilden. Die Erfindung hat erkannt, dass zur Lösung der Aufgabe ein Konzept erfolgreicher sein kann, das -anders als ein eingangs erläutertes globales Venturiprinzip-- einen höheren Staudruck akzeptiert, jedoch auch einen höheren Querschnitt zum Einströmen des zweiten Gases in die Strömung des ersten Gases zur Verfügung stellt. Die Erfindung hat erkannt, dass dieses auf einem "lokalen Venturiprinzip" basierenden Konzept Einströmverluste, insbesondere Übertrittverluste eines zweiten Gases in das erste Gas weitgehend verringert; d. h. ein Beiwertverlust des Gasmischers ist verringert. Die Erfindung hat erkannt, dass in der realen Anwendung ein deutlicher Anteil eines Totaldruckverlustes bzw. eine deutliche Wirkungsgradverschlechterung weniger dadurch bewirkt wird, dass kein ausreichend reduzierter statischer Druck zur Verfügung gestellt ist, sondern vielmehr dadurch, dass ein zu großer Übertrittsverlust bei einer Optimierung des globalen Mischprinzips die Vorteile überwiegt. Zur Umsetzung eines Konzepts eines lokalen Mischprinzips sieht die Erfindung vor, dass mindestens ein Hohlstab eine Vielzahl von Durchtrittsöffnungen für das zweite Gas aufweist, so dass der Hohlraum mit dem zylindrischen Mischraumfluid fluidverbunden ist. Bevorzugt erstrecken sich alle Hohlstäbe der Anzahl der Hohlstäbe quer zur Längsachse und quer zur Querachse.

Das Konzept der Erfindung konstruiert mit der Anzahl der Hohlstäbe eine Mischanordnung, mittels der eine Vielzahl von Durchtrittsöffnungen über den gesamten Strömungsquerschnitt im Mischraum des Gehäuseteils verteilt werden können. Dabei dienen die Höhlstäbe der Mischanordnung weniger einer globalen Beeinflussung einer Strömung sondern weisen vielmehr nur einen geringen gegen den Strömungsverlauf gerichtete Anströmquerschnitt auf; der insofern die Strömung lediglich lokal beeinflusst. Aufgrund dieser lokalen Beeinflussung stellt sich ein Venturiprinzip lediglich lokal ein. Infolge des "lokalen Venturiprinzips" im Bereich der Vielzahl von Durchtrittsöffnungen an einem Hohlstab wird lediglich lokal ein Spülgefälle zur Verfügung gestellt, das einerseits eine ausreichende Mischung des zweiten Gases zur Strömung des ersten Gases bewirkt und zum anderen weniger anfällig ist für Druckverluste infolge eines angeschlossenen Brennraums oder dergleichen. Infolge des lokalen Venturiprinzips wird weniger eine globale Beschleunigung der Verbrennungsluft erreicht, da eine Durchströmungsöffnung mit den Hohlstäben praktisch nur unwesentlich verengt wird bzw. nur theoretisch verengt wird ohne dass dies bedeutenden globalen Einfluss auf die Strömungsgeschwindigkeit hätte. Gleichwohl wirkt das Venturiprinzip lokal in unmittelbarer Nähe einer Anströmfläche eines Hohtstabs und der in der Nähe der der Anströmfläche angebrachten Vielzahl von Durchtrittsöffnungen.

Das auf diese Weise realisierte "lokale Venturiprinzip" als Mischprinzip gemäß dem Konzept der Mischanordnung hat infolge der praktisch über den gesamten Querschnitt eines Mischraumes verteilten Anströmflächen mit benachbarten venturidüsenartigen Durchtrittsöffnungen den Vorteil, dass die Einblendung des zweiten Gases in die Strömung des ersten Gases besonders homogen erfolgt. Eine homogene Einmischung des zweiten Gases in das erste Gas und damit ein besonders homogenes Gasgemisch bei dennoch klein gehaltenem und einfach konstruierten Mischraum ist die vorteilhafte Folge.

Das Konzept der Erfindung erhöht insgesamt die gleichwohl dezentral verteilte Fläche von Durchtrittsöffnungen fürdas zweite Gas in das erste Gas bzw. die Fläche von Durchtrittsöffnungen aus dem Ringraum in den Mischraum kann im Hinblick auf eine Anwendung erhöht und abgestimmt werden. Gleichzeitig wird ein Staudruck infolge eines deutlich geringeren Spülgefälles und praktisch unbedeutender Einschränkung des Durchströmungs-Querschnitts im Mischraum erhöht im Vergleich zu einem "globalen Venturiprinzip". Die Lösung führt zu einer geringeren Anfälligkeit des Gasmischers hinsichtlich eines Totaldruckverlustes und zu einem wesentlich homogeneren Gasgemisch. Das Konzept ist vergleichsweise einfach zu realisieren und erweist sich als kostengünstiger im Vergleich zu einem Gasmischer mit einer zentralen Venturidüse. Im Vergleich zu einem globalen Venturimischprinzip kann das Konzept der Erfindung vergleichsweise kurze Mischstrecken mit dennoch großem Querschnitt zur Verfügung stellen.

Vorteilhafte Weiterbildungen der Erfindung sind den Unteransprüchen zu entnehmen, die im einzelnen weitere bevorzugte Möglichkeiten angeben, das Konzept der Erfindung mit weiteren Vorteilen im Rahmen der Aufgabenstelllung weiterzubilden.

Besonders bevorzugt ist die Mischanordnung spiegelsymmetrisch bzgl. einer die Querachse und Längsachse enthaltenden ersten Zentralebene als auch spiegelsymmetrisch bzgl. einer senkrecht auf der Querachse stehenden zweiten Zentralebene. Anders ausgedrückt, hat es sich als vorteilhaft erwiesen, die Mischanordnung nicht punktsymmetrisch auszulegen. Die Weiterbildung erreicht vorteilhaft, dass sich bei einer Zuführung des zweiten Gases aus Richtung der Querachse das zweite Gas mit gleicher Druckamplitude auf die eine und die andere Seite einer Fluidverbindung eines Hohlstabs zum Ringraum verteilt. Mit Vorteil führt dies zu einer gleichmäßigen Einströmung des zweiten Gases in einen Hohlstab sowohl auf der einen als auch auf der anderen Seite bzw. mit gleichen Strömungs- und Druckamplituden auf beiden Seiten. Es erweist sich als besonders vorteilhaft, wenn der Hohlstab senkrecht zur Querachse ausgerichtet ist. In dem Fall kann von einem besonders ausgewogenen Gleichgewicht der Druckamplitude auf beiden Seiten des Hohlstab ausgegangen werden. Gleichwohl kann es sich je nach Verwendung auch als angemessen erweisen, wenn der Hohlstab aus der senkrechten Ausrichtung heraus gekippt ist, sich jedoch dennoch grundsätzlich quer zur Querachse erstreckt. Bevorzugt sollte die Abweichung von der senkrechten Ausrichtung zur Querachse nicht mehr als 30° getragen.

Ein gerade verlaufender Hohlstab hat sich jedoch als besonders vorteilhaft erwiesen. Es kann sich in einer Abwandlung der Weiterbildung auch als vorteilhaft erweisen, wenn ein Hohlstab abweichend von einer lediglich geradlinigen Ausbildung verläuft.

Bevorzugt erstreckt sich mindestens ein Hohlstab der Anzahl von Hohlstäben außermittig zu einem Durchmesser des Mischraums über eine Sekante des Mischraums. Je nach Anzahl der Hohlstäbe kann dies vorzugsweise für zwei, insbesondere wenigstens zwei Hohlstäbe, der Anzahl von Hohlstäben zutreffen. Im Rahmen einer besonders bevorzugten Weiterbildung sind alle Hohlstäbe außermittig zu einem Durchmesser des Mischraums über eine Sekante des Mischraums angeordnet.

Unter Berücksichtigung der besonders bevorzugten vorgenannten zweifachen Spiegelsymmetrie der Mischanordnung hat sich die vorgenannte Variante einer Weiterbildung, insbesondere für eine geradzahlige Anzahl von Hohlstäben, als vorteilhaft erwiesen. Insbesondere ist in diesem Fall die Mischanordnung frei von einem mittigen Hohlstab.

In einer anderen Variante einer Weiterbildung , insbesondere im Falle einer ungeradzahligen Anzahl von Hohlstäben, hat es sich als vorteilhaft erwiesen, dass sich nur ein einziger mittiger Hohlstab der Anzahl von Hohfstäben quer zur Längsachse und quer zur Querachse sowie mittig über einen Durchmesser des Mischraums erstreckt. Im Rahmen dieser anderen Variante kann beispielsweise nur ein einziger mittiger Hohlstab oderunter Berücksichtigung der vorgenannten zweifachen Spiegelsymmetrie-- eine ungeradzahlige Anzahl von Hohlstäben wie drei, fünf sechs, sieben Hohlstäbe usw. vorgesehen sein.

Grundsätzlich kann die Anzahl der Hohlstäbe beim Gasmischer als Funktion einer Anzahl von Zylindern eines Gasmotors oder dergleichen Arbeits-oder Verbrennungsmaschine vorbestimmt sein. Insgesamt hat es sich als vorteilhaft erwiesen, dass die Anzahl der Hohlstäbe zwischen vier und zwölf liegt. Insbesondere hat es sich als vorteilhaft erwiesen, dass die Anzahl der Hohlstäbe mit der Anzahl von Zylindern eines Gasmotors steigt; anders ausgedrückt, je höher die an den Gasmischer angeschlossene Arbeitsvolumina sind, desto höher sollte die Anzahl der Hohlstäbe sein. Es hat sich als vorteilhaft erwiesen, dass eine Gesamtfläche von Durchtrittsöffnungen für das zweite Gas zwischen dem zylindrischen Mischraum und dem Ringraum vergleichsweise groß sein sollte, um einen Vordruck --d. h. ein Druckniveau des zum Gasmischer zugeführten zweiten Gasesmöglichst niedrig zu haften Während es also grundsätzlich vorteilhaft ist, dass ein Staudruck des ersten Gases und eine Zuströmfläche des zweiten Gases erhöht wird, hat es sich gemäß dieser Weiterbildung auch als vorteilhaft erwiesen, den Vordruck des zugeführten zweiten Gases möglichst niedrig zu halten.

Es hat sich auch als vorteilhaft erwiesen, dass der Hohlstab eine erste Vielzahl von Durchtrittsöffnungen auf einer Oberflachseite und eine zweite Vielzahl von Durchtrittsöffnungen auf einer Unterflachseite aufweist. Zum Einen erhöht dies die Durchtrittsfläche für das zweite Gas vorteilhaft. Zum Anderen wird der Abstand zwischen Durchtrittsöffnungen für das zweite Gas verringert. Bei einem verringerten Abstand kann sich eine besonders vorteilhafte homogene Durchmischung des ersten und zweiten Gases einstellen. Dieser Weiterbildung liegt die Überlegung zu Grunde, dass eine molekulare Mischstrecke als kürzester freier Weg zwischen z. B. einem Molekül des Brenngases (zweites Gas) und z. B. einem Molekül einer Ladeluft (erstes Gas) ist; je geringer also der Abstand zwischen den Durchtrittsöffnungen ist, desto eher wird der Abstand nur unwesentlich größer als die molekulare Mischstrecke sein. Anders ausgedrückt, je näher der Abstand der Durchtrittsöffnungen dem Maß einer molekularen Mischstrecke kommt, desto homogener wird eine Gasdurchmischung sein und desto kleiner kann der Bauraum des Gasmischers ausfallen.

Dem Konzept dieser Weiterbildung folgend hat es sich als besonders vorteilhaft erwiesen, dass eine Vielzahl von Durchtrittsöffnungen entlang der gesamten Länge des Hohlstabs verteilt ist, insbesondere gleichbeabstandet verteilt ist. Anders ausgedrückt wird vorteilhaft die gesamte Länge des Hohlstabs genutzt, um eine Vielzahl von Durchtrittsöffnungen anzuordnen. Beispielsweise kann eine Vielzahl von Durchtrittsöffnungen in einer Reihe oder in mehreren Reihen oder auch versetzt zueinander je nach Bedarf verteilt sein.

Im Rahmen einer die gleichmäßige Durchmischung des ersten und zweiten Gases unterstützenden Mischanordnung hat es sich als besonders vorteilhaft erwiesen, dass wenigstens ein erster und ein zweiter Hohlstab gleichgerichtet, insbesondere planparallel ausgerichtet ist. Anders ausgedrückt hat sich eine geometrisch exakt planparallele Ausrichtung als besonders bevorzugt erwiesen; leichte Abweichungen von der exakt geometrischen Anordnung im Rahmen einer grundsätzlichen Gleichrichtung der Hohlstäbe hat sich je nach Verwendungszweck auch als möglich erwiesen. Als besonders vorteilhaft hat sich die Gleichrichtung bzw. planparallele Anordnung aller Hohlstäbe der Anzahl von Hohlstäben erwiesen. Der insbesondere stromabwärtig einer Eintrittsblende, angeordnete Ringraum zur Zuführung des zweiten Gases ist zu dem Mischraum über weitere Durchtrittsöffnungen für das zweite Gas direkt mit dem Mischraum verbunden. Die weiteren Durchtrittsöffnungen sind stromaufwärtig der Vielzahl von Durchtrittsöffnungen in dem Hohlstab angeordnet Diese Weiterbildungen erhöhen vorteilhaft die gesamte Durchtrittsfläche des zweiten Gases zum Mischraum. Insbesondere berücksichtigt eine stromaufwärtige Anordnung der weiteren Durchtrittsöffnungen vor einer stromabwärtigen Anordnung der Durchtrittsöffnungen in einem Hohlstab das Mischverhalten aus einer Radial-Richtung und Mischverhalten aus einer Sekanten-Richtung im Querschnitt der Strömung positiv.

Im Rahmen einer besonders bevorzugten Weiterbildung kann die Platzierung der Vielzahl von Durchtrittsöffnungen für das zweite Gas als auch die geometrische Ausbildung der Hohlstäbe hinsichtlich des Strömungsverhaltens und Mischverhaltens der Gase verbessert werden.

Insbesondere kann ein Hohlstab der Anzahl von Hohlstäben in Form eines Flachstabes gebildet sein; ein Flachstab kann vergleichsweise einfach mit einem Kastenprofil hergestellt werden. Eine Schmalseite eines Flachstabes hat bevorzugt einen den strömungsverlauf nur lokal beeinflussenden Anströmquerschnitt. Bevorzugt ist eine Flachseite des Flachstabes parallel zur Längsachse ausgerichtet.

Die Ausbildung der Schmalseite des Flachstabes ist ausreichend verdrängungsgering gestaltet, um gemäß dem oben erläuterten allgemeinen Konzept einen Staudruck hoch zu halten. Die Schmalseite des Flachstabes dient nicht der Darstellung eines "globalen Venturiprinzips". Vielmehr dient eine stromaufwärtige Schmalseite des Hohlstabes mit einer Anströmfläche --beispielsweise in etwa einer Halbrundung-dazu, einen Strömungsstaupunkt darzustellen, der insofern ein lediglich "lokales Venturiprinzip" zu realsieren in der Lage ist; insbesondere ist die Anströmfläche frei von einer Durchtrittsöffnung. Beispielsweise kann ein Hohlstab ein Rechteckprofil mit einer vorderen halbrunden Kante aufweisen.

Bevorzugt sollte eine von der stromaufwärtigen Schmalseite des Hohlstabes zur Flachseite übergehende und an die Anströmfläche anschießende Stromführungsfläche, die Vielzahl von Durchtrittsöffnungen aufweisen. Im Bereich der Stromführungsfläche kann nämlich davon ausgegangen werden, dass eine Gasströmung noch an einer Oberfläche des Flachstabes anliegt; also bei der Vielzahl von Durchtrittsöffnungen ein lokales Venturiprinzip zum Tragen kommt und somit die Anströmfläche zur Erzeugung eines lokalen Unterdrucks in der Stromführungsfläche, d. h. im Bereich der Vielzahl von Durchtrittsöffnungen, geeignet ist.

Bevorzugt ist eine weiter stromabwärtig von der Flachseite des Hohlstabes übergehende und an die Stromführungsfläche anschließende Stromablösefläche frei von einer Durchtrittsöffnung. Das Freihalten sowohl der Anströmfläche als auch der Stromablösefläche von Durchtrittsöffnungen hat den Vorteil, dass ein Eindringen des ersten Gases in den Zuführungsbereich des zweiten Gases verlässlich unterbunden ist.

Konkret lässt sich vorteilhaft die Vielzahl von Durchtrittsöffnungen in einem Bereich der Stromführungsfläche der Flachseite anordnen, der stromaufwärtig der Mittelsenkrechten der Flachseite liegt. Beispielsweise kann die Vielzahl von Durchtrittsöffnungen in einer Reihe, z. B.grundsätzlich nah und gleichbeabstandet zueinander, parallel entlang einer stromaufwärtigen Seitenkante (als Grenze zwischen stromaufwärtiger Schmalseite und Flachseite) des Hohlstabes angeordnet sein. Die genaue Zahl und Fläche einer Durchtrittsöffnung --und damit auch deren Abstand kann je nach Verwendungszweck des Gasmischers nach der zu erreichenden Gesamteinströmungsftäche für das zweite Gas und nach der zu erreichenden Absenkung der Übertrittsverluste des zweiten Gases in das erste Gas eingestellt werden. Unter einer Seitenkante ist insbesondere eine Grenze zwischen der Halbrundung und einer flachen Flachseite des Hohlstabes zu verstehen.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in' der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: eine perspektivische Teilschnittansicht eines Gasmischsystems mit einem Gasmotor und einem Gasmischer einer bevorzugten Ausführungsform, der in einem Mischraum eine Mischanordnung aufweist, die gemäß dem Konzept der Erfindung ausgebildet ist;
- Fig. 2:: eine perspektivische Teilschnittansicht des Gasmischers und eine Detailansicht zur Darstellung eines lokalen Venturiprinzips als Funktionsprinzip.

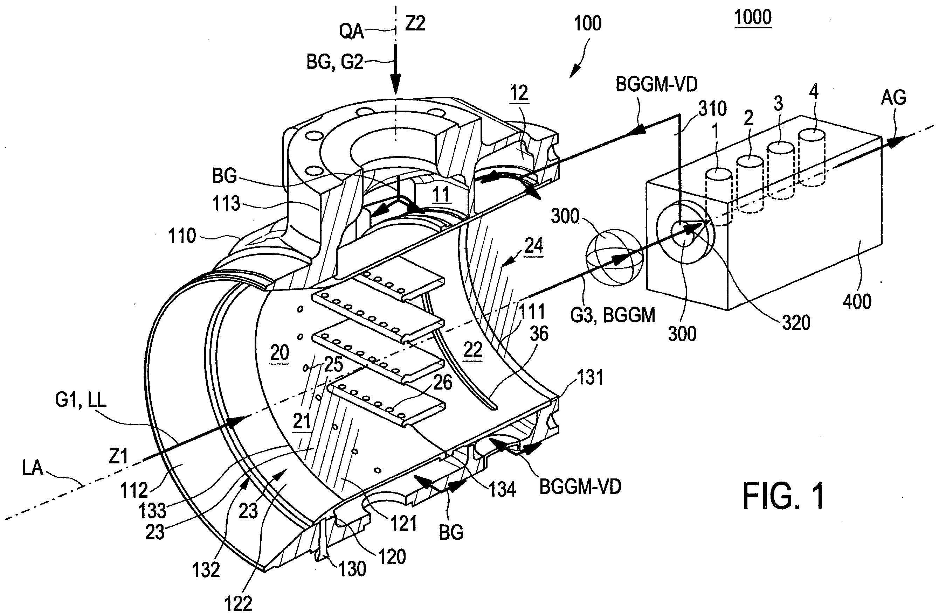

Fig. 1 zeigt ein Gasmischsystem 1000 mit einem Gasmischer 100 zum Mischen eines ersten Gases G1 --vorliegend eine Ladeluft LL-- sowie eines zweiten Gases G2vortiegend ein Brenngas BG-- für einen Gasmotor 400. Das aus dem ersten Gas G1 und dem zweiten Gas G2 gebildete Gasgemisch G3 --vorliegend das Brenngasgemisch BGGM-- wird einem Verdichter 300 zugeführt und in verdichteter Form schfießlich einer Brennkraftmaschine, die vorliegend als der Gasmotor 400 mit den Zylindern 1, 2, 3, 4 symbolisch dargestellt ist. Das im Gasmotor 400 unter Arbeitsverrichtung verbrannte Brenngasgemisch BGGM wird als Abgas AG in eine Abgasrückführung und, ggfs. über eine Abgasnachbehandlung, in die Umgebung abgegeben, was nicht weiter dargestellt ist. Bei der vorliegenden Ausführungsform ist dargestellt, dass der Gasmischer 100 in einer Hochdruckrückführung 310 eingebunden ist. Ein Druckregler 320 dient vorliegend der Leistungsführung für den Gasmotor 400 und sorgt in nicht näher dargestellter Weise für eine Abzweigung eines verdichteten Anteils des verdichteten Brenngasgemischs BGGM-VD nach dem Verdichter 300 in die Hochdruckrückführung 310 zurück zum Gasmischer 100. Das verdichtete Brenngasgemisch BGGM-VD kann über den Gasmischer 100 wieder dem Brenngasgemisch BGGM vor dem Verdichter 300 zugeführt werden.

Das Gehäuse des Gasmischers 100 hat ein erstes, äußeres Gehäuseteil 110 sowie ein zweites, inneres Gehäuseteil 120. Das erste und das zweite Gehäuseteil 110, 120 sind über Schraubverbindungen 130 und formschlüssige Verbindungen 131 derart miteinander verbunden, dass das zweite Gehäuseteil 120 fest eingesetzt in dem ersten Gehäuseteil 110 gehalten ist. Die Ladeluft LL wird in einer Richtung entlang einer Längsachse LA des Gasmischers 100 aus einer ersten Zuführung Z1 in einen Mischraum 20 eingebracht, der in dem ersten Gehäuseteil gebildet ist. Das erste Gas G1 wird dazu durch ein stromaufwärtig vom Mischraum 20 am ersten Gehäuseteil 110 angeordneten ersten Einführteil 112 zugeführt, wobei das erste Einführteil 112 mit einem zweiten Einführteil 122 des zweiten Gehäuseteils 120 glatt fortgesetzt wird. Die insgesamt vom ersten und zweiten Einführteil 112, 122 gebildete Einführblende 132 schließt schließlich über eine Kante 133 an den geometrisch zylindrischen Mischraum 20 im zweiten Gehäuseteil 120 an.

Zwischen dem ersten und dem zweiten Gehäuseteil 110, 120 ist ein den Mischraum 20 umgebender und von diesem abgetrennten und mittels Fluidverbindungen fluidverbundenen Ringraum 11 gebildet, in den das zweite Gas G2 in Form des Brenngases BG aus einer zweiten Zuführung Z2 eingebracht werden kann. Der Anschluss der zweiten Zuführung Z2 an das erste Gehäuseteil 110 erfolgt über einen Ringflansch 113. Das zweite Gas G2 wird entlang einer Querachse QA zunächst in den vorgenannten Ringraum 11 und daraus über die als Durchtrittsöffnungen gebildeten Fluidverbindungen in den Mischraum 20 eingebracht. Vorliegend sind sowohl der Ringraum 11 als auch der Mischraum 20 entlang der Längsachse LA ausgerichtet, wobei der Misch raum zylindrisch ausgebildet ist und vom Ringraum 11 ringförmig umgeben ist. Der Ringraum 11 erstreckt sich entlang der Längsachse LA nur über einen Teilbereich der Länge des Mischraums 20.

Der Mischraum 20 selbst ist geometrisch als ein in Richtung der Längsachse LA ausgerichteter gerader Zylinder mit kreisförmigem Querschnitt 23 gebildet. Die Fläche des hier am Eingang des Mischraums 20 eingezeichneten Querschnitts 23 ändert sich nicht vom Eingang des Mischraums 20 entlang der Längsachse LA bis zu einem Querschnitt 24 am Ausgang; entlang der Längsachse LA hat der Mischraum 20 einen im wesentlichen konstanten Durchmesser und die Querschnitte 23, 24 entlang der Längsachse LA sind von einer Wandung 121 des zweiten Gehäuseteils 120 begrenzt. Vorliegend ist das zweite Gehäuseteil 120 zur Bildung eines ersten Teils 21 des Mischraums 20 aus einer ersten Zylinderhülse und aus einer zweiten Zylinderhülse zur Bildung des zweiten Teils 22 des Mischraums 20 zusammengesetzt, wobei Zylinderhülsen formschlüssig an einem Ringansatz 134 aufeinanderstoßen. Der Querschnittsverlauf hat eine konstante Größe sowohl über einen ersten Teil 21 des Mischraums 20 als auch über einen zweiten Teil des Mischraums 22. Der zweite Teil des Mischraums dient zur Zuführung des verdichteten Brenngasgemisches BGGM-VD aus einem zweiten Ringraum 12, der an die Hochdruckrückführung 310 angeschlossen ist. Stromabwärtig des Mischraums 20 ist durch das erste Gehäuseteil 110 eine Ausführblende 111 gebildet, die vorliegend einen nicht verengten und auch nicht aufgeweiteten Querschnitt 24 am Ausgang des Mischraums 20 begrenzt Der Querschnitt 24 am Ausgang schließt vielmehr glatt an die stromabwärtige Führung des Gasgemisches G3, d. h. dem Brenngasgemisch BGGM, im zweiten Teil 22 des Mischraums 20 an.

Der rückgeführte Anteil des verdichteten Brenngasgemischs BGGM-VD wird zum zweiten Teil 22 des Mischraums 20 über eine im wesentlich umfänglich verlaufende Fluidverbindung in der Wandung 121 der zweiten Zylinderhülse des zweiten Gehäuseteils 120 --hier ein Umfangsschlitz in Form eines Langloches 36- zugeführt. Die Zuführung des Brenngases BG aus dem Ringraum 11 zum ersten Teil 21 des Mischraums 20 erfolgt über umfänglich angeordnete Lochbohrungen in Form von Rundlöchern 35. Aus den Länglöchem 36 bzw. aus den Rundlöchern 35 kann das verdichtete Brenngas BGGM-VD als auch des Brenngas BG in radialer Richtung dem Mischraum 20 zugeführt werden. Die schlitzartige Ausführung der Fluidzuführungen im zweiten Teil 22 des Mischraums 20, d. h. der Langlöcher 36, dient der Entspannung des verdichteten Brenngasgemisches BGGM-VD bei der Zuführung. Die kleinere Ausführung der Rundlöcher 35 entlang des Umfangs des ersten Teils 21 unterstützt einen ausreichend hohen Druck für eine Injektion des Brenngases BG in radialer Richtung in den Mischraum 20. Dabei ist der Ringraum 11 zur Zuführung des zweiten Gases G2 zum stromabwärts der Einführblende 132 angeordneten Mischraum 20 über die als Rundlöcher 35 ausgeführten weiteren Durchtrittsöffnungen 25 für das zweite Gas G2 direkt mit dem Mischraum 20 verbunden.

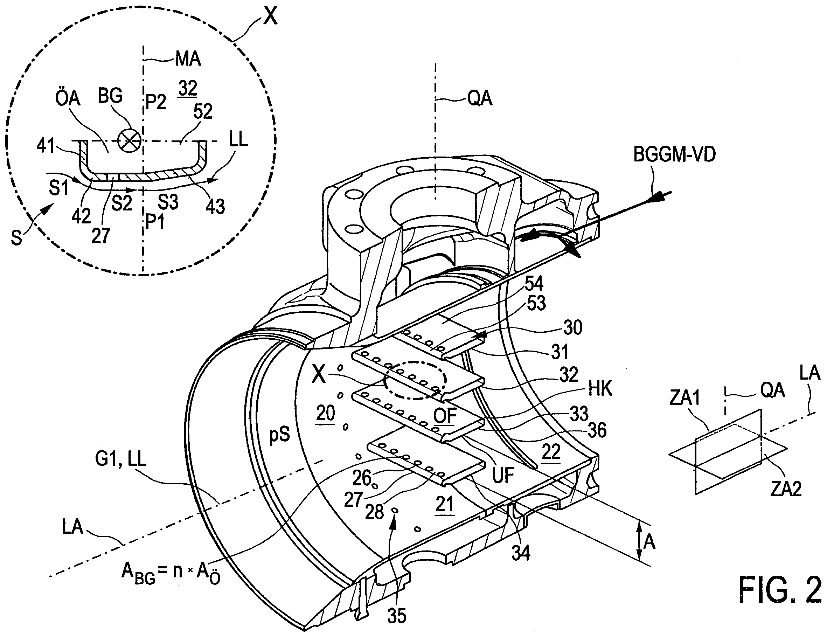

Bezug nehmend auf Fig. 2 sind die weiteren Durchtrittsöffnungen -die hier mit 25 bezeichnet sind- stromaufwärtig einer Vielzahl von Durchtrittsöffnungen 26, 27 gebildet, die in ihrer Funktion in Fig. 2 und dem weiteren Detail X der Fig. 2 dargestellt sind.

Fig. 2 zeigt dazu, dass im Mischraum 20, nämlich dem ersten Teil 21 des Mischraums 20, eine Mischanordnung 30 mit einer Anzahl von Hohlstäben 31, 32, 33, 34 angeordnet ist, die sich alle quer zur Längsachse LA und quer zur Querachse QA erstrecken. Vorliegend sind dies die Hohlstäbe 31, 32, 33, 34, die als Ganzes die Mischanordnung 30 bilden. Die Mischanordnung 30 ist hinsichtlich der Anordnung der Hohlstäbe 31, 32, 33, 34 spiegelsymmetrisch bezüglich einer die Querachse QA und Längsachse LA enthaltenden ersten Zentralebene ZA1 als auch spiegelsymmetrisch bezüglich einer senkrecht auf der Querachse stehenden zweiten Zentralebene ZA2 gebildet. Insbesondere ist dazu ein Hohlstab 31, 32, 33, 34 jeweils als Flachhohlprofil mit abgerundeter vorderen, d. h. einer Strömung S zugewandten stromaufwärtigen, Schmalseite 53 mit einer Anströmseite 41 gebildet. Ein als. Flachstab ausgebildeter Hohlstab 31, 32, 33, 34 weist dazu eine Oberflachseite OF und einer Unterflachseite UF auf, die allesamt planparallel zur zweiten Zentralebene ZA2 ausgerichtet sind. Eine Hinterkante HK ist eines Hohtstabs 31, 32, 33, 34 ist im Wesentlichen rechteckförmig gemäß dem Rechteckprofil ausgebildet. Eine Vorderkante VK weist die vorliegend als Halbrundung ausgebildete Anströmfläche 41 auf, die im Detail X näher dargestellt ist.

Fig. 2 zeigt lediglich den Gasmischer 100 des Gasmischsystems 1000, wobei für gleiche oder ähnliche Teile oder Teile gleicher oder ähnlicher Funktion gleiche Bezugszeichen verwendet sind; im übrigen ist die Mischanordnung 30 gemäß des eingangs erläuterten "lokalen Venturi-Prinzips" als bestimmendes Mischprinzip des Gasmischers 100 ausgebildet und dazu in Fig. 2 beschrieben - für die anderen Teile der Fig. 2 wird identisch auf die Beschreibung zur Fig. 1 verwiesen.

Die Vorderkante VK einer Schmalseite 53 eines als Flachstab ausgebildeten Hohlstabs 31, 32, 33, 34 ist mit einer Anströmfläche 41 versehen, die den Strömungsverlauf einer Ladeluft LL nur lokal beeinflusst. An die Anströmfläche 41 des Hohlstabs 32 -der im Detail X beispielhaft für alle in einem symmetrischen Halbschnitt seines Profils dargestellt ist-- schließt eine Stromführungsfläche 42 und weiter stromabwärtig eine Stramablösefläche 43 an. Eine Strömung S der Ladeluft LL an der Oberfläche des als Flachstab ausgebildeten Hohlstabs 32 ist im Detail exemplarisch gezeigt. Daraus ist ersichtlich, dass ein erster Teil S1 der Strömung S die Anströmfläche 41 abstromt und ein zweiter Teil S2 der Strömung S, theoretisch laminar, an der Stromführungsfläche 42 eng geführt wird. Je nach einem Detail einer Ausbildung des Profils des Flachstabs sowie konkreter Strömungsparameter der Strömung S ist im stromabwärtigen Teil des Profils eine Stromablösefläche 43 für eine abgelöste Strömung S3 ausgebildet. Unter Berücksichtigung des "lokalen Venturiprinzips" ist maßgeblich die Stromführungsfläche 42 geeignet mit der Strömung S2 einen lokalen Unterdruck im Bereich einer vorliegend beispielhaft dargestellten Durchtrittsöffnung 27 zu erzeugen. Während also im Hohlraum 52 des Hohlstabs 32 ein Druck P2 herrscht, so herrscht auf der unmittelbaren Außenseite des Hohlstabs ein Druck P1 vor. Dabei liegt ein Druck P2 unterhalb des Drucks P1, sorgt also dafür, dass Brenngas BG durch die Öffnung 27 in die Luftströmung der Ladeluft LL eintritt (und nicht umgekehrt).

Wie aus Fig. 2 im Einzelnen ersichtlich, ist ein Hohlstab 31, 32, 33, 34 jeweils mit einer ersten Vielzahl von Durchtrittsöffnungen 26 auf der Oberflachseite OF und einer zweiten Vielzahl von Durchtrittsöffnungen 27 auf einer Unterflachseite UF versehen. Die Durchtrittsöffnungen 26, 27 sind dabei jeweils als einzige Reihe entlang der gesamten Länge des Hohlstabs 31, 32, 33, 34 verteilt und vorliegend gleich beabstandet. Die Reihe der Durchtrittsöffnungen 26, 27 ist dabei -wie aus dem Detail X ersichtlich-- im Bereich der Stromführungsfläche 42 angeordnet. Wie eine Öffnungsachse ÖA einer Durchtrittsöffnung 26, 27 im Vergleich zu einer Mittelachse MA des Hohlstabs 32 zeigt, ist die Vielzahl von Durchtrittsöffnungen 26, 27 in demjenigen Bereich der Stromführungsfläche 42 der Flachseite 54 --insbesondere OF, UF-angeordnet, die stromaufwärtig der Mittelsenkrechten MA der Flachseite 54 liegt. In der vorliegenden Ausführungsform ist die Öffnungsachse ÖA der Vielzahl von Durchtrittsöffnungen 26, 27 in etwa mittig zwischen einer Seitenkante 28 - der Seitenkante 28 zwischen der Flachseite 54 und der Schmalseite 53- und der Mittelsenkrechten MA des Hohlstabs 31 32, 33, 34 angeordnet. Diese Platzierung hat sich bei der vorliegenden Ausführungsform als besonders vorteilhaft zur Realisierung des "lokalen Venturipririzips" erwiesen, da zum Einen die Strömung S2 noch vom Profil des Hohlstabs 32 geführt wird; d. h. vor allem sich noch nicht abgelöst hat wie der Teil S3 der Strömung S im Bereich der Stromablösefläche 43. Eine Unterdruckerzeugung ist damit im Bereich der Teilfläche S2 besonders effektiv.

Im Ergebnis wird gemäß der vorliegenden Ausführungsform mit der Vielzahl n von Durchtrittsöffnungen 25, 26, 27 eine vergleichsweise hohe Gesamtfläche ABG alter Aüstrittsöffnungen AÖ für das Brenngas BG vom Ringraum 11 zum Mischraum 20 erreicht; dabei steht ein, im Vergleich zu einem globalen Venturiprinzip, vergleichsweise hoher Strömungsdruck pS an der Mischanordnung 30 an. Dies führt zu einem vergleichsweise geringen Totaldruckverlust der Mischanordnung 30 im Gasmischer 100, der deutlich unter dem eines Gasmischers mit globalem Venturiprinzip liegt. Grund ist, dass auf eine globale Beeinflussung der Strömung S --beispielsweise durch einen zentralen als Venturikörper wirkender Verdrängungskörper-bei der vorliegenden Ausführungsform verzichtet wird. Es zeigt sich, dass mit den vorliegenden Mischanordnung 30 im Gasmischer 100 auch ein verbessertes Klopfverhalten und Emmisionsverhalten eines Brennkraftmotors, insbesondere Gasmotors 400, erreicht werden kann. Die Ausführung der Mischanordnung 30 im Gasmischer 100 bewirkt zudem eine besonders homogene Durchmischung des ersten und zweiten Gases G1, G2 im Gasgemisch G3, was die Betriebsbandbreite des Gasmischers 100 und damit die Lastschaltfähigkeit des Gasmotors 400 vorteilhaft beeinflusst. Insbesondere ist die Anzahl der Hohlstäbe --hier sind es vier Hohlstäbe 31, 32, 33, 34-- als Funktion der Anzahl der Zylinder 1, 2, 3, 4 des Gasmotors 400 wählbar. Das Verhältnis --hier 1: 1-- einer Anzahl n der Hohlstäbe zur Anzahl der Zylinder ist vorliegend nur exemplarisch gemeint und liegt in einer realen Anwendung regelmäßig unterhalb von 1:1, d. h. die Zylinderzahl übersteigt regelmäßig die Anzahl n der Hohlstäbe. Vorteilhaft ist zudem ein Abstand A der Hohlstäbe 31, 32, 33, 34 zueinander derart wählbar, dass bei geeigneter Injektion des Brenngases BG über die Durchtrittsöffnungen 26, 27 in den Abstand A, dieser einer realen Mischstrecke (als kleinste Entfernung zwischen Molekülen des Brenngases BG und der Ladeluft LL bei gegebenen Strömungsverhältnissen) relativ nahe kommt, bzw. nur wenig darüber liegt. Anders ausgedrückt, kann der Abstand A derart verringert werden, dass die Länge eines Mischraums 20 entlang der Längsachse LA vergleichsweise klein ausfallen kann, um eine homogene und besonders gute Durchmischung des Brenngases BG und der Ladeluft LL garantieren zu können.

Der vorliegende Gasmischer 100 ist in vorteilhafterweise vergleichsweise einfach ausgeführt und daher für unterschiedlichste Anwendungen mit hoher Betriebsbandbreite betreibbar, Insbesondere hat es sich bei der vorliegenden Ausführungsform als entbehrlich erwiesen, weitere Steuerungsorgane zur Gasmengenregelung vorzusehen. Diese erweisen sich -wie beispielsweise bei dem eingangsgenannten Stand der Technik- als begrenzend für die. Betriebssicherheit und Langzeitbetriebsgarantie eines Gasmischers 100. Gleichwohl kann in einer hier nicht gezeigten Abwandlung eine Blendenkonstruktion oder eine andere brenngasregelnde Konstruktion vorgesehen sein, um die Menge des zugeführten Brenngases BG über die Zuführung Z2 zu regeln oder im Ringraum 11 zu regeln oder die Menge des Brenngases BG beim Durchtritt durch die Durchtrittsöffnungen 25, 26, 27 zu regeln.

### Bezugszeichen

- 11: Ringraum
- 12: zweiter Ringraum
- 20: Mischraum
- 21: erster Teil Mischraum
- 22: zweiter Teil Mischraum
- 22,24: Querschnitt
- 25, 26, 27: Durchtrittsöffnung
- 28: Seitenkante
- 30: Mischanordnung
- 31, 32, 33, 34: Hohlstab, insbesondere Flachstab
- 35: Rundloch
- 36: Langloch
- 41: Anströmfläche
- 42: Stromführungsfläche
- 43: Stromablösefläche
- 52: Hohlraum
- 53: Schmalseite
- 54: Flachseite
- 100: Gasmischer
- 110: erstes äußeres Gehäuseteil
- 111: Ausführblende
- 112: erstes Einführteil
- 113: Ringflansch
- 120: zweites inneres Gehäuseteil
- 121: Wandung
- 122: zweites Einführteil
- 130: Schraubverbindungen
- 131: formschlüssige Verbindung
- 132: Einführblende
- 133: Kante
- 134: Ringansatz
- 300: Verdichter
- 310: Hockdruckrückführung
- 320: Druckregler
- 400: Gasmotor
- 1000: Gasmischsystem
- A: Abstand
- AG: Abgas
- BG: Brenngas
- BGGM: Brenngasgemisch
- BGGM-VD: verdichtetes Brenngasgemisch
- G1: erstes Gas
- G2: zweites Gas
- G3: Gasgemisch
- HK: Hinterkante
- LA: Längsachse
- LL: Ladeluft
- MA: Mittelsenkrechte
- n: Anzahl
- OF: Oberflachseite
- UF: Unterflachseite
- ÖÄ: Öffnungsachse
- P1: Druck
- P2: Druck
- ps: Strömungsdruck
- QA: Querachse
- S: Strömung
- S1: erster Teil der Strömung
- S2: zweiter Teil der Strömung
- S3: abgelöste Strömung
- UF: Unterflachseite
- VK: Vorderkante
- Z1: Zuführung
- Z2: Zuführung
- ZA1: erste Zentralebene
- ZA2: zweite Zentralebene

## Patentansprüche

1. Gasmischer (100) zum Mischen eines ersten Gases (G1) und eines zweiten Gases (G2), insbesondere einer Verbrennungsluft wie z. B. eine Ladeleuft (LL) und eines Brenngases (BG), vorzugsweise für einen Gasmotor (400), insbesondere einen Magergasmotor, mit einem an eine Gasführung anschließbaren mehrteiligen Gasgehäuse, das aufweist:
- ein erstes, äußeres Gasgehäuseteil (110), mit einer Zuführung für das erste Gas (G1) in einer Längsachse (LA) und einer Zuführung für das zweite Gas (G2) in einer Querachse (QA),
- ein zweites, inneres, unter Bildung eines Ringraumes (11) für ein zweites Gas (G2), in das erste Gasgehäuseteil (110) eingesetztes, Gasgehäuseteil (120), mit einem Mischraum (20) in den das erste Gas (G1) und das zweite Gas (G2) zum Mischen zu einem Gasgemisch einbringbar ist, wobei
- das erste Gasgehäuseteil (110) und das zweite Gasgehäuseteil (120)und der Ringraum (11) entlang der Längsachse (LA) ausgerichtet sind und der Mischraum (20) zylindrisch entlang der Längsachse (LA) ausgerichtet ist, und wobei
- im Mischraum (20) eine Mischanordnung (30) einer Anzahl von Hohlstäben (31, 32, 33, 34) angeordnet ist, wobei ein Hohlraum (52) eines Hohlstabes mit dem Ringraum (11) beidseitig fluidverbunden ist, und wobei sich die Anzahl der Hohlstäbe (31, 32, 33, 34) quer zur Längsachse (LA) und quer zur Querachse (QA) erstreckt, und mindestens ein Hohlstab eine Vielzahl von Durchtrittsöffnungen (26, 27) für das zweite Gas (G2) aufweist, sodass der Hohlraum (52) mit dem zylindrischen Mischraum (20) fluidverbunden ist, **dadurch gekennzeichnet, dass** der Ringraum (11) zur Zuführung des zweiten Gases (G2) zu dem Mischraum (20) über weitere Durchtrittsöffnungen (25) für das zweite Gas direkt mit dem Mischraum (20) verbunden ist, wobei die weiteren Durchtrittsöffnungen (25) stromaufwärtig der Vielzahl von Durchtrittsöffnungen (26, 27) in dem mindestens einen Hohlstab (31, 32, 33, 34) angeordnet sind.

2. Gasmischer (100) nach Anspruch 1, **dadurch gekennzeichnet, dass** sich die Anzahl der Hohlstäbe (31, 32, 33, 34) quer zur Längsachse (LA) und quer zur Querachse (QA) derart erstreckt, dass die Mischanordnung (30) spiegelsymmetrisch bezüglich einer die Querachse (QA) und Längsachse (LA) enthaltenden ersten Zentralebene (ZA1) als auch spiegelsymmetrisch bezüglich einer senkrecht auf der Querachse (QA) stehenden zweiten Zentralebene (ZA2) ist.

3. Gasmischer (100) nach Anspruch 1 oder 2, **dadurch gekennzeichnet, dass** sich mindestens ein Hohlstab der Anzahl von Hohlstäben (31, 32, 33, 34), vorzugsweise zwei, insbesondere alle Hohlstäbe der Anzahl von Hohlstäben, außermittig zu einem Durchmesser des Mischraums (20) über eine Sekante des Querschnitts (23, 24) des Mischraums (20) erstreckt.

4. Gasmischer (100) nach Anspruch 1 oder 2, **dadurch gekennzeichnet, dass** wenigstens ein erster und ein zweiter Hohlstab, insbesondere alle Hohlstäbe (31, 32, 33, 34) der Anzahl von Hohlstäben, gleichgerichtet sind, insbesondere planparallel sind.

5. Gasmischer (100) nach einem der vorhergehenden Ansprüche, **dadurch gekennzeichnet, dass**, die Mischanordnung (30) frei von einem mittigen Hohlstab ist.

6. Gasmischer (100) nach einem der Ansprüche 1 bis 4, **dadurch gekennzeichnet, dass** sich nur ein mittiger Hohlstab der Anzahl von Hohlstäben (31, 32, 33, 34) quer zur Längsachse (LA) und quer zur Querachse (QA) sowie mittig über einen Durchmesser des Querschnitts (23, 24) des Mischraums (20) erstreckt.

7. Gasmischer (100) nach einem der vorhergehenden Ansprüche, **dadurch gekennzeichnet, dass** der Mischraum (20) und die Mischanordnung (30) frei von einem um die Längsachse (LA) zentrierten Verdrängungskörper ist.

8. Gasmischer (100) nach einem der vorhergehenden Ansprüche, **dadurch gekennzeichnet, dass** sich ein Hohlstab, vorzugsweise alle Hohlstäbe (31, 32, 33, 34) der Anzahl von Hohlstäben, über den gesamten Querschnitt (23, 24), insbesondere Sekante und/oder Durchmesser, des Mischraums (20) mit gleichbleibendem Stabquerschnitt erstrecken.

9. Gasmischer (100) nach einem der vorhergehenden Ansprüche, **dadurch gekennzeichnet, dass** die Mischanordnung (30) einen, zwei, drei oder mehr Hohlstäbe hat, insbesondere die Anzahl der Hohlstäbe zwischen eins und zwölf liegt, vorzugsweise vier oder mehr beträgt.

10. Gasmischer (100) nach einem der vorhergehenden Ansprüche, **dadurch gekennzeichnet, dass** der Hohlstab eine erste Vielzahl von Durchtrittsöffnungen (26) auf einer Oberflachseite (OF) und ein zweite Vielzahl von Durchtrittsöffnungen (27) auf einer Unterflachseite (UF) aufweist, insbesondere eine Vielzahl von Durchtrittsöffnungen (26, 27) entlang der gesamten Länge des Hohlstabs verteilt ist, insbesondere gleichbeabstandet verteilt ist.

11. Gasmischer (100) nach einem der vorhergehenden Ansprüche, **dadurch gekennzeichnet, dass** eine stromaufwärtig, insbesondere am ersten Gasgehäuseteil (110), angeordnete Einführblende (132), einen verengten Einführströmungsquerschnitt für das erste Gas (G1) bildet, an den der zylindrische Mischraum (20) strömungsglatt anschließt und/oder eine weiter stromabwärtig angeordnete Ausführblende (111) einen nicht verengten, insbesondere aufgeweiteten, Ausführströmungsquerschnitt für das gemischte erste und zweite Gas (G1, G2) ausbildet, insbesondere glatt an eine stromabwärtige Führung des gemischten ersten und zweiten Gases (G1, G2) anschließbar ist.

12. Gasmischer (100) nach einem der vorhergehenden Ansprüche, **dadurch gekennzeichnet, dass** ein Hohlstab der Anzahl von Hohlstäben (31, 32, 33, 34) in Form eines Flachstabes gebildet ist, wobei eine Schmalseite (53) des Flachstabes einen den Strömungsverlauf nur lokal beeinflussenden Anströmquerschnitt (41) aufweist und eine Flachseite (54) des Flachstabes parallel zur Längsachse (LA) und quer, insbesondere senkrecht, zur Querachse (QA) ausgerichtet ist.

13. Gasmischer (100) nach einem der vorhergehenden Ansprüche, **dadurch gekennzeichnet, dass** eine stromaufwärtige Schmalseite (53) des Hohlstabes eine Anströmfläche (41) in Form etwa einer Halbrundung aufweist, die einen Strömungsstaupunkt aufweist und frei von einer Druchtrittsöffnung ist, wobei eine von der stromaufwärtigen Schmalseite (53) des Hohlstabes zur Flachseite (54) übergehende und an die Anströmfläche (41) anschließende Stromführungsfläche (42) die Vielzahl von Durchtrittsöffnungen (25, 26, 27) aufweist und eine von der Flachseite (54) des Hohlstabes übergehende und an die Stromführungsfläche (42) anschließende Stromablösefläche (43) frei von einer Durchtrittsöffnung ist.

14. Gasmischer (100) nach einem der vorhergehenden Ansprüche, **dadurch gekennzeichnet, dass** die Vielzahl von Durchtrittsöffnungen (26, 27) in einem Bereich der Stromführungsfläche (42) der Flachseite (54) angeordnet ist, der stromaufwärtig der Mittelsenkrechten (MA) der Flachseite (54) liegt, insbesondere die Vielzahl von Durchtrittsöffnungen (26, 27) in einer Reihe zunächst benachbart zu und parallel entlang einer stromaufwärtigen Seitenkante (28) zwischen der Schmal-und Flachseite (53, 54) des Hohlstabes angeordnet sind.

15. Gasmischer (100) nach einem der vorhergehenden Ansprüche, **dadurch gekennzeichnet, dass** der Ringraum (11) zwischen dem zweiten und ersten Gasgehäuseteil (120, 110) ausgebildet ist und den Mischraum (20) umgibt und sich entlang der Längsachse (LA) nur über einen Teilbereich des Mischraums (20) erstreckt, wobei der zylindrische Mischraum geometrisch als ein in Längsachse (LA) ausgerichteter gerader Zylinder mit kreisförmigem Querschnitt (23, 24) einer Grundfläche und entlang der Längsachse (LA) mit im wesentlichen konstantem Durchmesser von einer Wandung (121) des zweiten Gehäuseteils (120) begrenzt ist.

16. Gasmischer (100) nach einem der vorhergehenden Ansprüche, **dadurch gekennzeichnet, dass** der Gasmischer (100) einen zweiten, stromabwärtigen Ringraum (12) zum Zuführen eines rückgeführten verdichteten Brenngasgemisches (BGGM-VD) in den Mischraum (20) aufweist , insbesondere der erste, stromaufwärtige, Ringraum (11) über Rundlöcher (35) mit dem Mischraum (20) verbunden ist und/oder der zweite, stromabwärtige, Ringraum (12) über Langlöcher (36) mit dem Mischraum (20) verbunden ist, wobei die Rundlöcher (35) und die Langlöcher (36) entlang eines Umfangs des Mischraums (20) angeordnet und/oder ausgerichtet sind.

17. Gasmischsystem (1000) mit einem Gasmotor (400), insbesondere Magergasmotor, mit einer Anzahl von Zylindern und mit einem Gasmischer nach einem der Ansprüche 1 bis 16.

18. Gasmischsystem (1000) nach Anspruch 17, **dadurch gekennzeichnet, dass** die Anzahl der Hohlstäbe als Funktion einer Anzahl von Zylindern eines Gasmotors (400) derart vorbestimmt ist, dass die Anzahl mit der Anzahl von Zylindern des Gasmotors (400) steigt, so dass die Zylinderzahl die Anzahl der Hohlstäbe übersteigt.

## Claims

1. Gas mixer (100) for mixing a first gas (G1) and a second gas (G2), in particular combustion air, such as for example charge air (LL), and a combustion gas (BG), preferably for a gas engine (400), in particular a lean-burn gas engine, having a multi-part gas housing which is connectable to a gas line and which has
- a first, outer gas housing part (110), with a feed for the first gas (G1) in a longitudinal axis (LA) and a feed for the second gas (G2) in a transverse axis (QA),
- a second, inner gas housing part (120), which is inserted into the first gas housing part (110) so as to form a ring-shaped chamber (11) for a second gas (G2), having a mixing chamber (20) into which the first gas (G1) and the second gas (G2) can be introduced for the purposes of mixing to form a gas mixture, wherein
- the first gas housing part (110) and the second gas housing part (120) and the ring-shaped chamber (11) are oriented along the longitudinal axis (LA) and the mixing chamber (20) is oriented in cylindrical fashion along the longitudinal axis (LA), and wherein,
- in the mixing chamber (20), there is arranged a mixing arrangement (30) of a number of hollow rods (31, 32, 33, 34), wherein a cavity (52) of a hollow rod is fluidically connected on both sides to the ring-shaped chamber (11), and wherein the number of hollow rods (31, 32, 33, 34) extends transversely with respect to the longitudinal axis (LA) and transversely with respect to the transverse axis (QA), and
at least one hollow rod has a multiplicity of passage openings (26, 27) for the second gas (G2), such that the hollow chamber (52) is fluidically connected to the second mixing chamber (20), **characterized in that**
the ring-shaped chamber (11) is, for the feed of the second gas (G2) to the mixing chamber (20), connected via further passage openings (25) for the second gas directly to the mixing chamber (20), wherein the further passage openings (25) are arranged upstream of the multiplicity of passage openings (26, 27) in the at least one hollow rod (31, 32, 33, 34).

2. Gas mixer (100) according to Claim 1, **characterized in that**
the number of hollow rods (31, 32, 33, 34) extends transversely with respect to the longitudinal axis (LA) and transversely with respect to the transverse axis (QA) such that the mixing arrangement (30) is mirror-symmetrical with respect to a first central plane (ZA1) which encompasses the transverse axis (QA) and longitudinal axis (LA) and is also mirror-symmetrical with respect to a central plane (ZA2) which is perpendicular to the transverse axis (QA).

3. Gas mixer (100) according to Claim 1 or 2, **characterized in that** at least one hollow rod of the number of hollow rods (31, 32, 33, 34), preferably two, in particular all, of the hollow rods of the number of hollow rods, extends eccentrically with respect to a diameter of the mixing chamber (20) over a secant of the cross section (23, 24) of the mixing chamber (20).

4. Gas mixer (100) according to Claim 1 or 2, **characterized in that** at least one first and one second hollow rod, in particular all of the hollow rods (31, 32, 33, 34) of the number of hollow rods, are oriented in the same direction, in particular are plane-parallel.

5. Gas mixer (100) according to one of the preceding claims, **characterized in that** the mixing arrangement (30) has no central hollow rod.

6. Gas mixer (100) according to one of Claims 1 to 4, **characterized in that** only one central hollow rod of the number of hollow rods (31, 32, 33, 34) extends transversely with respect to the longitudinal axis (LA) and transversely with respect to the transverse axis (QA) and centrally across a diameter of the cross section (23, 24) of the mixing chamber (20).

7. Gas mixer (100) according to one of the preceding claims, **characterized in that** the mixing chamber (20) and the mixing arrangement (30) have no displacement body centred around the longitudinal axis (LA).

8. Gas mixer (100) according to one of the preceding claims, **characterized in that** a hollow rod, preferably all hollow rods (31, 32, 33, 34) of the number of hollow rods, extends with a uniform rod cross section over the entire cross section (23, 24), in particular secant and/or diameter, of the mixing chamber (20).

9. Gas mixer (100) according to one of the preceding claims, **characterized in that** the mixing arrangement (30) has one, two, three or more hollow rods, and in particular, the number of hollow rods lies between one and twelve, and preferably amounts to four or more.

10. Gas mixer (100) according to one of the preceding claims, **characterized in that** the hollow rod has a first multiplicity of passage openings (26) on a top flat side (OF) and a second multiplicity of passage openings (27) on a bottom flat side (UF), and in particular, a multiplicity of passage openings (26, 27) is distributed along the entire length of the hollow rod, in particular so as to be uniformly spaced apart.

11. Gas mixer (100) according to one of the preceding claims, **characterized in that** an introduction aperture (132) which is arranged upstream, in particular on the first gas housing part (110), forms a narrowed introduction flow cross section for the first gas (G1), which is adjoined in streamlined fashion by the cylindrical mixing chamber (20), and/or a discharge aperture (111) arranged further downstream forms a non-narrowed, in particular widened, discharge flow cross section for the mixed first and second gas (G1, G2), and in particular can be positioned so as to smoothly adjoin a downstream guide of the mixed first and second gas (G1, G2).

12. Gas mixer (100) according to one of the preceding claims, **characterized in that** a hollow rod of the number of hollow rods (31, 32, 33, 34) is formed in the manner of a flat rod, wherein a narrow side (53) of the flat rod has an inflow cross section (41) which only locally influences the flow profile, and a flat side (54) of the flat rod is oriented parallel to the longitudinal axis (LA) and transversely, in particular perpendicularly, with respect to the transverse axis (QA).

13. Gas mixer (100) according to one of the preceding claims, **characterized in that** an upstream narrow side (53) of the hollow rod has an inflow surface (41) approximately in the form of a semicircle, which has a flow stagnation point and has no passage opening, wherein a flow-guiding surface (42) which transitions from the upstream narrow side (53) of the hollow rod to the flat side (54) and which adjoins the inflow surface (41) has the multiplicity of passage openings (25, 26, 27), and a flow separation surface (43) which transitions from the flat side (54) of the hollow rod and which adjoins the flow-guiding surface (42) has no passage opening.

14. Gas mixer (100) according to one of the preceding claims, **characterized in that** the multiplicity of passage openings (26, 27) is arranged in a region of the flow-guiding surface (42) of the flat side (54) which is situated upstream of the perpendicular bisector (MA) of the flat side (54), and in particular, the multiplicity of passage openings (26, 27) is arranged in a row initially adjacent to and in parallel along an upstream side edge (28) between the narrow and flat sides (53, 54) of the hollow rod.

15. Gas mixer (100) according to one of the preceding claims, **characterized in that** the ring-shaped chamber (11) is formed between the second and first gas housing parts (120, 110) and surrounds the mixing chamber (20) and extends along the longitudinal axis (LA) only over a partial region of the mixing chamber (20), wherein the cylindrical mixing chamber is geometrically delimited as a straight cylinder, oriented in the longitudinal axis (LA) and with a circular cross section (23, 24) of a base area, and along the longitudinal axis (LA) with a substantially constant diameter by a wall (121) of the second housing part (120).

16. Gas mixer (100) according to one of the preceding claims, **characterized in that** the gas mixer (100) has a second, downstream ring-shaped chamber (12) for the feed of a recirculated compressed combustion gas mixture (BGGM-VD) into the mixing chamber (20), and in particular, the first, upstream ring-shaped chamber (11) is connected via circular holes (35) to the mixing chamber (20), and/or the second, downstream ring-shaped chamber (12) is connected via elongate holes (36) to the mixing chamber (20), wherein the circular holes (35) and the elongate holes (36) are arranged and/or oriented along a circumference of the mixing chamber (20).

17. Gas mixing system (1000) having a gas engine (400), in particular lean-burn gas engine, having a number of cylinders and having a gas mixer according to one of Claims 1 to 16.

18. Gas mixing system (1000) according to Claim 17, **characterized in that** the number of hollow rods is predetermined as a function of a number of cylinders of a gas engine (400), in such a way that the number increases with the number of cylinders of the gas engine (400), such that the number of cylinders exceeds the number of hollow rods.

## Revendications

1. Mélangeur de gaz (100) destiné à mélanger un premier gaz (G1) et un deuxième gaz (G2), en particulier un air de combustion comme par exemple un air d'admission (LL) et un gaz combustible (BG), de préférence pour un moteur au gaz (400), en particulier un moteur au gaz pauvre, avec un boîtier à gaz en plusieurs parties pouvant être raccordé à une conduite de gaz, et qui présente:
- une première partie extérieure de boîtier à gaz (110), avec une arrivée pour le premier gaz (G1) dans un axe longitudinal (LA) et une arrivée pour le deuxième gaz (G2) dans un axe transversal (QA),
- une deuxième partie intérieure de boîtier à gaz (120), introduite dans la première partie de boîtier à gaz (110), avec formation d'une chambre annulaire (11) pour un deuxième gaz (G2), avec une chambre de mélange (20) dans laquelle le premier gaz (G1) et le deuxième gaz (G2) peuvent être introduits pour être mélangés en un mélange de gaz, dans lequel
- la première partie de boîtier à gaz (110) et la deuxième partie de boîtier à gaz (120) et la chambre annulaire (11) sont orientées le long de l'axe longitudinal (LA) et la chambre de mélange (20) est orientée sous forme cylindrique le long de l'axe longitudinal (LA), et dans lequel
- un dispositif de mélange (30) avec un nombre de barres creuses (31, 32, 33, 34) est disposé dans la chambre de mélange (20), dans lequel une cavité (52) d'une barre creuse est en relation fluidique sur les deux côtés avec la chambre annulaire (11),
et dans lequel le nombre des barres creuses (31, 32, 33, 34) s'étend transversalement à l'axe longitudinal (LA) et transversalement à l'axe transversal (QA), et au moins une barre creuse présente une multiplicité d'ouvertures de passage (26, 27) pour le deuxième gaz (G2), de telle manière que la cavité (52) soit en liaison fluidique avec la chambre de mélange cylindrique (20),
**caractérisé en ce que** la chambre annulaire (11) est reliée, pour l'arrivée du deuxième gaz (G2) à la chambre de mélange (20), directement à la chambre de mélange (20) par d'autres ouvertures de passage (25) pour le deuxième gaz, dans lequel les autres ouvertures de passage (25) sont disposées en amont de la multiplicité d'ouvertures de passage (26, 27) dans ladite au moins une barre creuse (31, 32, 33, 34).

2. Mélangeur de gaz (100) selon la revendication 1, **caractérisé en ce que** le nombre des barres creuses (31, 32, 33, 34) s'étend transversalement à l'axe longitudinal (LA) et transversalement à l'axe transversal (QA), de telle manière que le dispositif de mélange (30) soit symétrique par rapport à un premier plan central (ZA1) contenant l'axe transversal (QA) et l'axe longitudinal (LA) et symétrique par rapport à un deuxième plan central (ZA2) situé perpendiculairement à l'axe transversal (QA).

3. Mélangeur de gaz (100) selon la revendication 1 ou 2, **caractérisé en ce qu'**au moins une barre creuse du nombre de barres creuses (31, 32, 33, 34), de préférence deux, en particulier toutes les barres creuses du nombre de barres creuses, s'étend de façon décentrée par rapport à un diamètre de la chambre de mélange (20) sur une sécante de la section transversale (23, 24) de la chambre de mélange (20).

4. Mélangeur de gaz (100) selon la revendication 1 ou 2, **caractérisé en ce qu'**au moins une première et une deuxième barres creuses, en particulier toutes les barres creuses (31, 32, 33, 34) du nombre de barres creuses, sont orientées de façon identique, en particulier sont planes parallèles.

5. Mélangeur de gaz (100) selon l'une quelconque des revendications précédentes, **caractérisé en ce que** le dispositif de mélange (30) est dépourvu d'une barre creuse centrale.

6. Mélangeur de gaz (100) selon l'une quelconque des revendications 1 à 4, **caractérisé en ce que** seule une barre creuse centrale du nombre de barres creuses (31, 32, 33, 34) s'étend transversalement à l'axe longitudinal (LA) et transversalement à l'axe transversal (QA) ainsi qu'au milieu sur un diamètre de la section transversale (23, 24) de la chambre de mélange (20).

7. Mélangeur de gaz (100) selon l'une quelconque des revendications précédentes, **caractérisé en ce que** la chambre de mélange (20) et le dispositif de mélange (30) sont dépourvus d'un corps de déplacement centré autour de l'axe longitudinal (LA).

8. Mélangeur de gaz (100) selon l'une quelconque des revendications précédentes, **caractérisé en ce qu'**une barre creuse, de préférence toutes les barres creuses (31, 32, 33, 34) du nombre de barres creuses, s'étendent sur toute la section transversale (23, 24), en particulier sur une sécante et/ou le diamètre, de la chambre de mélange (20) avec une section transversale de barre constante.

9. Mélangeur de gaz (100) selon l'une quelconque des revendications précédentes, **caractérisé en ce que** le dispositif de mélange (30) comporte une, deux, trois barres creuses, ou plus, en particulier le nombre des barres creuses se situe entre une et douze, de préférence vaut quatre ou plus.

10. Mélangeur de gaz (100) selon l'une quelconque des revendications précédentes, **caractérisé en ce que** la barre creuse présente une première multiplicité d'ouvertures de passage (26) sur un côté supérieur de la surface (OF) et une deuxième multiplicité d'ouvertures de passage (27) sur un côté inférieur de la surface (UF), en particulier une multiplicité d'ouvertures de passage (26, 27) sont réparties le long de toute la longueur de la barre creuse, en particulier sont réparties de façon équidistante.

11. Mélangeur de gaz (100) selon l'une quelconque des revendications précédentes, **caractérisé en ce qu'**un obturateur d'entrée (132) disposé en amont, en particulier sur la première partie de boîtier (110), forme une section transversale d'écoulement d'entrée rétrécie pour le premier gaz (G1), à laquelle la chambre de mélange cylindrique (20) se raccorde de façon lisse pour l'écoulement et/ou un obturateur de sortie (111) disposé plus loin en aval forme une section transversale d'écoulement de sortie non rétrécie, en particulier élargie, pour les premier et deuxième gaz mélangés (G1, G2), en particulier peut être raccordé de façon lisse à un guidage aval des premier et deuxième gaz mélangés (G1, G2).

12. Mélangeur de gaz (100) selon l'une quelconque des revendications précédentes, **caractérisé en ce qu'**une barre creuse du nombre de barres creuses (31, 32, 33, 34) est façonnée à la forme d'une barre plate, dans lequel un côté étroit (53) de la barre plate forme une section transversale d'amont (41) n'influençant que localement l'allure de l'écoulement et un côté plat (54) de la barre plate est orienté parallèlement à l'axe longitudinal (LA) et transversalement, en particulier perpendiculairement, à l'axe transversal (QA).

13. Mélangeur de gaz (100) selon l'une quelconque des revendications précédentes, **caractérisé en ce qu'**un côté étroit amont (53) de la barre plate présente une face d'amont (41) en forme environ de demi-arrondi, qui présente un point de stagnation d'écoulement et qui est dépourvue d'une ouverture de passage, dans lequel une face de guidage d'écoulement (42) passant du côté étroit d'amont (53) de la barre creuse au côté plat (54) et se raccordant à la face d'amont (41) présente la multiplicité d'ouvertures de passage (25, 26, 27) et une face de décollement d'écoulement (43) partant du côté plat (54) de la barre creuse et se raccordant à la face de guidage d'écoulement (42) est dépourvue d'ouverture de passage.

14. Mélangeur de gaz (100) selon l'une quelconque des revendications précédentes, **caractérisé en ce que** la multiplicité d'ouvertures de passage (26, 27) sont disposées dans une région de la face de guidage d'écoulement (42) du côté plat (54), qui est située en amont de la médiatrice (MA) du côté plat (54), en particulier la multiplicité d'ouvertures de passage (26, 27) sont disposées en une rangée d'abord à proximité et parallèlement le long d'une arête latérale amont (28) entre le côté étroit et le côté plat (53, 54) de la barre creuse.

15. Mélangeur de gaz (100) selon l'une quelconque des revendications précédentes, **caractérisé en ce que** la chambre annulaire (11) est formée entre la deuxième et la première partie de boîtier (120, 110) et entoure la chambre de mélange (20) et s'étend le long de l'axe longitudinal (LA) uniquement sur une région partielle de la chambre de mélange (20), dans lequel la chambre de mélange cylindrique géométriquement en forme de cylindre droit orienté selon l'axe longitudinal (LA) avec une section transversale ronde (23, 24) d'une face de base et un diamètre essentiellement constant le long de l'axe longitudinal (LA), est limitée par une paroi (121) de la deuxième partie de boîtier (120).

16. Mélangeur de gaz (100) selon l'une quelconque des revendications précédentes, **caractérisé en ce que** le mélangeur de gaz (100) présente une deuxième chambre annulaire aval (12) pour fournir un mélange de gaz combustible comprimé recyclé (BGGM-VD) dans la chambre de mélange (20), en particulier la première chambre annulaire amont (11) est reliée à la chambre de mélange (20) par des trous ronds (35) et/ou la deuxième chambre annulaire aval (12) est reliée à la chambre de mélange (20) par des trous oblongs (36), dans lequel les trous ronds (35) et les trous oblongs (36) sont disposés et/ou orientés le long d'une périphérie de la chambre de mélange (20).

17. Système de mélange de gaz (1000) avec un moteur au gaz (400), en particulier un moteur au gaz pauvre, avec un nombre de cylindres et avec un mélangeur de gaz selon l'une quelconque des revendications 1 à 16.

18. Système de mélange de gaz (1000) selon la revendication 17, **caractérisé en ce que** le nombre de barres creuses est prédéterminé en fonction d'un nombre de cylindres d'un moteur au gaz (400), de telle manière que le nombre augmente avec le nombre de cylindres du moteur au gaz (400), de telle manière que le nombre de cylindres dépasse le nombre des barres creuses.
